# EUROPÄISCHE PATENTANMELDUNG

(11) **EP 1 531 133 A1**
(43) Veröffentlichungstag der Anmeldung: **18.05.2005**
(21) Anmeldenummer: 04026851.8
(22) Anmeldetag: 11.11.2004
(51) Int. Cl.: B65G 19/02, B65G 47/64

(54) **Hängefördereinrichtung zum Transport von Fördergutträgern**

(30) Priorität: 12.11.2003 DE 10352782
(71) Anmelder: WF Logistik GmbH, 86899 Landsberg (DE)
(72) Erfinder: Braunmüller, Walter, 86916 Kaufering (DE)
(74) Vertreter: Tiesmeyer, Johannes, Dr.

(57) **Zusammenfassung**

Es wird eine Hängefördereinrichtung vorgeschlagen, welche Führungsschienen (2) für daran hängend verschiebbar geführte Haken (6) von Kleiderbügeln (4) und eine Weiche (15) mit einem schaltbaren Weichenzungenelement (14) aufweist, welches in einer ersten Schaltstellung (Fig. 1a) zwei aufeinander folgende Führungsschienenabschnitte (2a, 2b) einer ersten Förderstrecke verbindet und welches in einer zweiten Schaltstellung (Fig. 2a) eine Lücke (20) zwischen den beiden Führungsschienenabschnitten (2a, 2b) belässt, so dass längs der ersten Förderstrecke zu der Lücke (20) herangeführte Fördergutträgerhaken (6) durch die Lücke (20) hindurch zu einer Führungsschiene (2c) einer zweiten Förderstrecke gelangen können. Das Weichenzungenelement (14) ist von einem der Führungsschienenabschnitte (2a, 2b) aus im Wesentlichen geradlinig längs der ersten Förderstrecke in Richtung zu dem anderen Führungsschienenabschnitt (2b, 2a) vorbewegbar, um von der zweiten Schaltstellung in die erste Schaltstellung zu gelangen.

## Beschreibung

Die Erfindung betrifft eine Hängefördereinrichtung zum Transport von Fördergutträgern, die Führungsschienen für daran hängend verschiebbar geführte Haken von Fördergutträgern, insbesondere Kleiderbügel, und wenigstens eine Weiche mit einem als schaltbares Weichenzungenelement ausgebildeten Führungsschienenelement aufweist, welches in einer ersten Schaltstellung zwei aufeinander folgende Führungsschienenabschnitte einer ersten Förderstrecke verbindet, um Fördergutträger von dem einen Führungsschienenabschnitt zu dem anderen Führungsschienenabschnitt zu leiten, und welches in einer zweiten Schaltstellung eine Lücke zwischen den beiden Führungsschienenabschnitten belässt, so dass längs der ersten Förderstrecke zu der Lücke herangeführte Fördergutträgerhaken die erste Förderstrecke durch die Lücke hindurch verlassen und ggf. zu einer Führungsschiene einer zweiten Förderstrecke gelangen können.

Hängefördereinrichtungen der vorstehend genannten Art werden z.B. häufig in der Bekleidungsindustrie zum Transport von Kleidungsstücken verwendet, wobei die Kleidungsstücke an Kleiderbügeln hängen, welche in der Hängefördereinrichtung als Fördergutträger, d.h. als Transportmittel, dienen. Dabei hängen die Fördergutträger mit ihren Haken an einer betreffenden Führungsschiene der Hängefördereinrichtung, wobei sie längs der Führungsschiene gleiten können. Hängefördereinrichtungen der hier betrachteten Art sind üblicherweise mit einem Schleppantrieb für die Fördergutträger ausgestattet, wobei der Schleppantrieb ein zur Bewegung längs der Förderstrecke angetriebenes Schleppband, z.B. in Form einer Schleppkette, aufweist, an dem der Reihe nach Mitnehmerelemente für die Fördergutträger angeordnet sind. Die Mitnehmerelemente können z.B. von dem Schleppband nach unten abstehende Stifte sein, welche Fördergutträgerhaken auf der Führungsschiene zur Mitnahme längs der betreffenden Förderstrecke hintergreifen können.

Hängefördereinrichtungen, bei denen der Schleppantrieb Stifte als Mitnehmerelemente aufweist, werden auch als Pin-Förderer bezeichnet. Es kommen aber auch andere Antriebskonzepte für eine Hängefördereinrichtung der hier betrachteten Art in Frage, z.B. eines, bei dem der Schleppantrieb mit Schleppklinken als Mitnehmerelemente versehen ist.

Die Hängefördereinrichtungen können mittels der Weichen Sortierschritte bzw. Kommissionierschritte ausführen. Dabei wird jede Weiche mittels einer Weichensteuereinrichtung nach Maßgabe von Identifizierungsdaten oder Zielinformationen geschaltet, die als maschinenlesbare Kennzeichnungen an den der Weiche jeweils zugeführten Fördergutträgern bzw. an den daran befindlichen Waren vorgesehen sind. Zur Erfassung dieser Kennzeichnungen ist der Weiche ein Datenerfassungsgerät zugeordnet. Je nach Art der verwendeten Kennzeichnungen kann dies z.B. ein Barcode-Lesegerät oder ein Transpondergerät in der Nähe der Weiche sein.

Eine bekannte Hängefördereinrichtung mit Weiche ist z.B. in der DE 100 26 092 A1 beschrieben. Es handelt sich dabei um einen Pin-Förderer, bei dem an einer Schleppkette nach unten zur Führungsschiene abstehende Mitnehmerelemente vorgesehen sind, die an der Führungsschiene hängende Haken von Fördergutträgern zur Mitnahme längs der Förderstrecke hintergreifen können.

Die Weiche dieser bekannten Hängefördereinrichtung umfasst als Weichenzungenelement ein um eine horizontale Schwenkachse schwenkbares Führungsschienenelement. In einer ersten Schaltstellung der Weiche verbindet das Weichenzungenelement zwei aufeinander folgende Führungsschienenabschnitte einer ersten Förderstrecke. Die horizontale Schwenkachse des Weichenzungenelements ist durch eine Gelenkanordnung an dem stromabwärtigen Führungsschienenabschnitt definiert. Das Weichenzungenelement kann durch Verschwenken um diese Schwenkachse nach oben hin in eine zweite Weichenschaltstellung verschwenkt werden, so dass die Verbindung zwischen den beiden Führungsschienenabschnitten durch eine Lücke unterbrochen wird. Die Haken der zur Weiche dann nachrückenden Fördergutträger können in die Lücke fallen und gelangen auf eine Führungsschiene einer zweiten Förderstrecke. Hierbei handelt es sich bei der Hängefördereinrichtung nach der DE 100 26 092 A1 um eine schräg nach unten führende Rutschstange, an welcher die Fördergutträger unter der Wirkung ihrer Schwerkraft längs der zweiten Förderstrecke rutschen können.

Um sicherzustellen, dass bei einer Hängefördereinrichtung der in der DE 100 26 092 A1 erläuterten Art die Weiche mit relativ geringem Schalthub, d.h. kleinem Schwenkwinkel eine für das sichere Ausschleusen von Fördergutträgerhaken hinreichend große Ausschleuslücke beim Übergang von der ersten Schaltstellung in die zweite Schaltstellung erzeugen kann, ist es erforderlich, dass das Weichenzungenelement relativ lang ausgebildet ist. Die Weiche hat somit einen vergleichsweise großen Platzbedarf und benötigt normalerweise einen relativ starken Schaltantrieb.

Der Erfindung liegt die Aufgabe zugrunde, eine Hängefördereinrichtung der eingangs genannten Art bereitzustellen, bei der die Weiche nur geringen Platzbedarf hat und mit vergleichsweise kleinem Kraftaufwand rasch und sicher zwischen den Weichenschaltstellungen umschaltbar ist.

Zur Lösung dieser Aufgabe wird erfindungsgemäß vorgeschlagen, dass das Weichenzungenelement von einem der Führungsschienenabschnitte aus im Wesentlichen geradlinig längs der ersten Förderstrecke in Richtung zu dem anderen Führungsschienenabschnitt vorbewegbar ist, um von der zweiten Schaltstellung in die erste Schaltstellung zu gelangen.

Bei dem Weichenzungenelement kann es sich gemäß einer Ausführungsform der Erfindung um ein teleskopisch ausschiebbares und einziehbares Weichenzungenelement an dem einen Führungsabschnitt handeln. Ein solches Weichenzungenelement kann nach der vorliegenden Erfindung an dem stromaufwärtigen Führungsschienenabschnitt oder an dem stromabwärtigen Führungsschienenabschnitt der Weiche vorgesehen und bewegbar gehalten sein.

Gemäß einer Sonderbauform der Weiche ist sowohl an dem stromabwärtigen Führungsschienenabschnitt als auch an dem stromaufwärtigen Führungsschienenabschnitt ein solches Weichenzungenelement hin- und herverschiebbar angeordnet, wobei die beiden Weichenzungenelemente in der ersten Schaltstellung der Weiche einander angenähert - und in der zweiten Schaltstellung der Weiche unter Bildung der Ausschleuslücke für die Fördergutträgerhaken voneinander abgezogen sind.

Das Weichenzungenelement kann sehr klein ausgebildet sein und erfordert keine großen Umschaltkräfte für ein rasches und zuverlässiges Umschalten zwischen den beiden Weichenschaltstellungen. Insbesondere ist es nach der vorliegenden Erfindung auf einfache Weise möglich, mit einem kleinen Weichenzungenelement eine bedarfsweise große Ausschleuslücke zu realisieren, etwa um ein Bündel von Fördergutträgern oder Fördergutträger mit großen Hakenquerschnitten ausschleusen zu können.

Gemäß einer bevorzugten Ausführungsform, bei der das Weichenzungenelement an dem stromaufwärtigen Führungsschienenabschnitt der Weiche bewegbar angeordnet ist, kann der Schaltvorgang der Weiche selbst dann noch stattfinden, wenn sich bereits ein Haken auf dem Weichenzungenelement befindet. Die Weiche kann somit mit extrem kurzen Reaktionszeiten gemessen von dem Zeitpunkt der Identifizierung eines herangeführten Fördergutträgers geschaltet werden, um den betreffenden Fördergutträger entsprechend dem ihm zugewiesenen Ziel auf der ersten oder auf der zweiten Förderstrecke weiterzuleiten.

Die erfindungsgemäß realisierte Weiche kann auch in Steigungsstreckenabschnitten und Gefällestreckenabschnitten der Förderstrecke betrieben werden.

Gemäß einer bevorzugten Ausführungsform der Erfindung wird ein in der ersten Weichenschaltstellung zwischen dem Weichenzungenelement und dem einen Führungsschienenabschnitt gebildeter Zwischenraum von einem Führungsschienenbrückenelement überbrückt. Dieses Führungsschienenbrückenelement kann gemäß einer Variante der genannten Ausführungsform an dem Weichenzungenelement angeordnet sein, und zwar in der Weise, dass es beim Übergang des Weichenzungelementes in die zweite Schaltstellung mit dem einen Führungsschienenabschnitt seitlich überlappen kann. In diesem Überlappungsbereich übergreifen Fördergutträgerhaken das Führungsschienenbrückenelement und den einen Führungsschienenabschnitt gemeinsam.

Gemäß einer anderen Variante der vorstehend genannten Ausführungsform der Erfindung ist das Führungsschienenbrückenelement an dem einen Führungsschienenabschnitt angeordnet, und zwar in der Weise, dass es beim Übergang des Weichenzungenelementes in die zweite Schaltstellung mit dem Weichenzungenelement seitlich überlappen kann. Im Überlappungsbereich können Fördergutträgerhaken dann das Führungsschienenbrückenelement und das Weichenzungenelement gemeinsam übergreifen.

Bei beiden Varianten ist das Führungsschienenbrückenelement vorzugsweise ein Plattenteil, dessen oberer Rand zumindest näherungsweise mit dem oberen Rand des Weichenzungenelementes und dem oberen Rand des einen Führungsschienenabschnittes im Bereich der Weiche in einer gemeinsamen Ebene liegt.

Vorzugsweise ist an beiden Seiten des Weichenzungenelementes bzw. des Führungsschienenabschnittes ein solches Plattenteil vorgesehen.

Die Hängefördereinrichtung nach der Erfindung weist gemäß einer bevorzugten Ausführungsform eine mittels einer Weichensteuereinrichtung steuerbare Schaltantriebsvorrichtung für das Weichenzungenelement auf. Die Schaltantriebsvorrichtung kann einen pneumatischen oder einen hydraulischen Zylinder als Schaltantriebselement umfassen. Eine alternative Ausführungsform der Schaltantriebsvorrichtung hat einen Elektromotor oder einen Elektromagneten als Schaltantriebselement.

Das Schaltantriebselement ist vorzugsweise an dem einen Führungsschienenabschnitt angeordnet, insbesondere in diesen integriert, wobei das Weichenzungenelement an einem längs dem einen Führungsschienenabschnitt vor- und zurückbewegbaren Weichenzungenträger des Schaltantriebselementes befestigt ist.

Das Weichenzungenelement ist vorzugsweise auf einer Stützfläche aufliegend gleitend bewegbar. Diese Stützfläche ist gemäß einer Weiterbildung der Erfindung an der abzweigenden Führungsschiene der zweiten Förderstrecke vorgesehen.

Vorzugsweise ist das Weichenzungenelement an seinem vorderen Ende mit einer Schrägflanke ausgestattet, die in der zweiten Schaltstellung eine Rampe für das Abführen von Fördergutträgerhaken nach unten zur zweiten Förderstrecke bildet.

Zumindest in Zuordnung zur ersten Förderstrecke sollte eine Schleppeinrichtung mit Mitnehmerelementen zur Mitnahme der die Führungsschiene mit ihren Haken übergreifenden Fördergutträger vorgesehen sein. Wie an sich bekannt, können die Mitnehmerelemente an einem Schleppband oder einer Schleppkette angeordnete Klinken, Stifte, Bürstenelemente oder Mitnehmertaschen sein.

Damit die Hängefördereinrichtung zur Durchführung von umfangreicheren Sortieraufgaben verwendbar ist, wird vorgeschlagen, dass sie einen Sortierfördererbereich mit mehreren Weichen der vorstehend erläuterten Art umfasst.

Vorzugsweise kommt eine Weichensteuereinrichtung zum Einsatz, die ein Datenerfassungsgerät, insbesondere optisches Lesegerät oder Transpondergerät, umfasst, um Zielkennzeichnungen bzw. Identifikationskennzeichnungen an den der Weiche jeweils zugeführten Fördergutträgern oder an daran befindlichem Fördergut zu erfassen.

Ein bevorzugtes Ausführungsbeispiel der Erfindung wird nachstehend unter Bezugnahme auf die Figuren näher erläutert.
- Fig. 1a: zeigt in einer Ausschnitts-Seitenansicht einen Weichenbereich einer Hängefördereinrichtung nach der Erfindung mit einem in der ersten Schaltstellung befindlichen Weichenzungenelement.
- Fig. 1b: zeigt eine Längsschnitt-Seitenansicht des Weichenbereichs der Hängefördereinrichtung aus Fig. 1a.
- Fig. 1c: zeigt eine Ausschnitts-Draufsicht auf den Weichenbereich der Hängefördereinrichtung aus Fig. 1a.
- Fig. 2a: zeigt den Weichenbereich der Hängefördereinrichtung in einer Ausschnitts-Seitenansicht ähnlich der Fig. 1a, wobei sich jedoch das Weichenzungenelement in der zweiten Schaltstellung befindet.
- Fig. 2b: zeigt eine Längsschnitt-Seitenansicht des Weichenbereichs der Hängefördereinrichtung aus Fig. 2a.
- Fig. 2c: zeigt eine Ausschnitts-Draufsicht auf den Weichenbereich der Hängefördereinrichtung aus Fig. 2a.

In den Figuren ist ein Weichenbereich eines Ausführungsbeispiels einer Hängefördereinrichtung nach der Erfindung dargestellt.

Die Hängefördereinrichtung umfasst eine Führungsschienenanordnung 2 mit Führungsschienenabschnitten 2a und 2b, welche einer ersten Förderstrecke zugeordnet sind. Im Beispielsfall dient die Hängefördereinrichtung zum Transport von Kleidungsstücken (nicht gezeigt) an Kleiderbügeln 4, die mit ihren Haken 6 an einer betreffenden Führungsschiene 2 hängen und längs der Führungsschiene 2 geführt verschiebbar sind.

Zum Verschieben der Fördergutträger 4 längs der ersten Förderstrecke ist eine Schleppeinrichtung vorgesehen, welche eine Schleppkette 8 und von der Schleppkette 8 nach unten abstehende Mitnehmerelemente 10 aufweist. Die Schleppkette 8 ist eine im Umlauf angetriebene Endloskette, die sich in dem gezeigten Weichenbereich gemäß dem Pfeil 12 von rechts nach links bewegt. Die mitgeführten Mitnehmerstifte 10 können in der in Fig. 1a gezeigten Weise Fördergutträgerhaken 6 an der Führungsschienenanordnung 2 hintergreifen und zur Bewegung längs der ersten Förderstrecke mitnehmen.

In den Figuren 1a - 1c ist ein Weichenzungenelement 14 in einer ersten Schaltstellung gezeigt, in der es Fördergutträger 4, welche an dem Führungsschienenabschnitt 2a herangeführt werden, längs der ersten Förderstrecke zu dem Führungsschienenabschnitt 2b weiterleitet. Das Weichenzungenelement 14 ist ein von dem Führungsschienenabschnitt 2a aus geradlinig in Richtung der ersten Förderstrecke vorschiebbares und zurückziehbares Führungsschienenelement. In der ersten Schaltstellung gemäß Fig. 1a ist das Weichenzungenelement 14 vorgeschoben, so dass es mit seiner vorderen Schrägflanke 16 an einer komplementären Schrägflanke 18 des Führungsschienenabschnitts 2b anliegt.

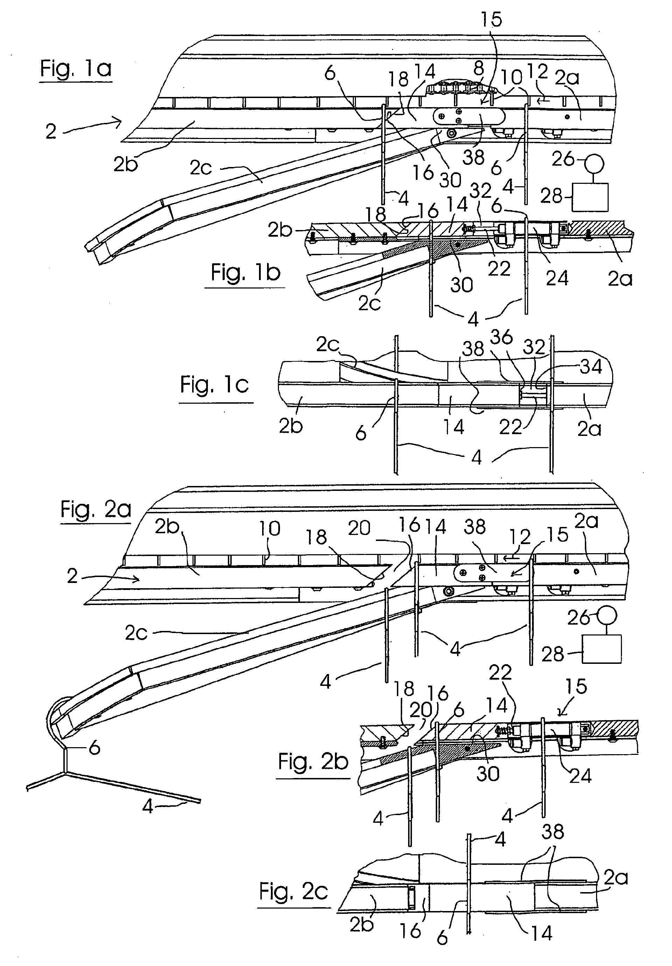

In den Fig. 2a - 2c ist das Weichenzungenelement 14 in einer zweiten Schaltstellung gezeigt, nämlich in der Stellung, in der es zu dem Führungsschienenabschnitt 2a zurückgezogen ist, wobei zwischen den voneinander getrennten Schrägflanken 16, 18 des Weichenzungenelementes 14 und des Führungsschienenabschnitts 2b ein Ausschleusspalt 20 für die Fördergutträger 4 entstanden ist. Die den Ausschleusspalt 20 erreichenden Fördergutträgerhaken 6 können an der in Förderrichtung nach vorn und unten geneigten Schrägflanke 16 des Weichenzungenelementes 14 auf eine Führungsschiene 2c rutschen, welche einer zweiten Förderstrecke, also einer von der ersten Förderstrecke abzweigenden Förderstrecke zugeordnet ist. Die zweite Förderstrecke ist eine abschüssige Rutschstrecke, wobei die Fördergutträger 4 aufgrund ihrer Schwerkraft an der Führungsschiene 2c zu einem weiter unten liegenden Ziel rutschen können.

In den Figuren 1b und 2b ist zu erkennen, dass das Weichenzungenelement 14 an einer Kolbenstange 22 eines doppelt wirkenden Pneumatikzylinders 24 befestigt ist und durch Ausfahren der Kolbenstange 22 aus dem Pneumatikzylinder 24 in die erste Schaltstellung gemäß Fig. 1b - bzw. durch Einziehen der Kolbenstange 22 in den Pneumatikzylinder 24 in die zweite Schaltstellung gemäß Fig. 2b bewegbar ist.

Der Pneumatikzylinder 24 ist Teil einer Weichensteuereinrichtung, die ferner ein Datenerfassungsgerät 26 und einen Steuerrechner 28 umfasst. Das Datenerfassungsgerät 26 ist stromaufwärtig in Nähe der Weiche 15 angeordnet, um Fördergutträger 4, welche sich der Weiche 15 nähern, anhand von daran befindlichen Kennzeichnungen (nicht gezeigt) zu identifizieren. Diese Kennzeichnungen können z.B. Barcode-Kennzeichnungen sein, wobei in diesem Fall das Datenerfassungsgerät 26 ein Barcode-Leser ist, welcher die von ihm erfassten Daten an den Steuerrechner 28 weiterleitet. Der Steuerrechner 28 steuert den Pneumatikzylinder 24 über eine betreffende pneumatische Einrichtung nach Maßgabe der von dem Lesegerät 26 erhaltenen Kennzeichnungsdaten, um die Weiche 15 in den ersten Schaltzustand oder in den zweiten Schaltzustand zu schalten und somit die Fördergutträger 4 in Abhängigkeit von deren Kennzeichnung entweder längs der ersten Förderstrecke zu dem zweiten Führungsschienenabschnitt 2b weiterzuleiten (Fig. 1a) oder auf die Führungsschiene 2c der zweiten Förderstrecke auszuschleusen (Fig. 2a).

Das Weichenzungenelement 14 liegt auf einer Stützfläche 30 am oberen Ende des abzweigenden Führungsschienenabschnitts 2c auf, so dass die Kolbenstange 22 im Wesentlichen nur Axialkräfte zu übertragen bzw. aufzunehmen hat.

Zur Überbrückung des Zwischenraums 32 zwischen dem vorderen Ende 34 des Führungsschienenabschnitts 2a und dem hinteren Ende 36 des Weichenzungenelementes 14 in der ersten Schaltstellung des Weichenzungenelementes 14 (vgl. Fig. 1c) sind seitlich an dem Weichenzungenelement 14 Überbrückungsbleche 38 vorgesehen, die über das hintere Ende des Weichenzungenelementes 14 nach hinten abstehen und mit dem Führungsschienenabschnitt 2a seitlich überlappen. Die oberen Ränder der Überbrückungsbleche 38 liegen mit den oberen Rändern der Führungsschienenabschnitte 2a und 2b in einer gemeinsamen Ebene, d.h. in der Seitenansicht gemäß Fig. 1a und Fig. 1b auf einer gemeinsamen Linie, so dass die erste Förderstrecke nicht unterbrochen ist, wenn die Weichenzunge 14 in der ersten Schaltstellung gemäß den Figuren 1a - 1c ist.

Bei dem vorstehend erläuterten bevorzugten Ausführungsbeispiel der Erfindung ist das Weichenzungenelement 14 von dem stromaufwärtigen Schienenabschnitt 2a aus mittels des daran in einer Ausnehmung aufgenommenen Pneumatikzylinders 24 schaltbar. In einer alternativen Ausführungsform der Erfindung kann ein betreffendes Weichenzungenelement von dem stromabwärtigen Führungsschienenabschnitt aus vor- und zurückbewegbar sein.

Ferner sind im Rahmen der Erfindung auch Abwandlungen denkbar, bei denen die Förderrichtung insbesondere auf der ersten Förderstrecke umkehrbar ist.

## Patentansprüche

1. Hängefördereinrichtung zum Transport von Fördergutträgern (4), wobei sie Führungsschienen (2) für daran hängend verschiebbar geführte Haken (6) von Fördergutträgern (4), insbesondere Kleiderbügeln, und wenigstens eine Weiche (15) mit einem als schaltbares Weichenzungenelement (14) ausgebildeten Führungsschienenelement aufweist, welches in einer ersten Schaltstellung zwei aufeinander folgende Führungsschienenabschnitte (2a, 2b) einer ersten Förderstrecke verbindet, um Fördergutträger (4) von dem einen Führungsschienenabschnitt (2a) zu dem anderen Führungsschienenabschnitt (2b) zu leiten, und welches in einer zweiten Schaltstellung eine Lücke (20) zwischen den beiden Führungsschienenabschnitten (2a, 2b) belässt, so dass längs der ersten Förderstrecke zu der Lücke (20) herangeführte Fördergutträgerhaken (6) die erste Förderstrecke durch die Lücke (20) hindurch verlassen und ggf. zu einer zweiten Förderstrecke gelangen können, **dadurch gekennzeichnet, dass** das Weichenzungenelement (14) von einem der Führungsschienenabschnitte (2a, 2b) aus im Wesentlichen geradlinig längs der ersten Förderstrecke in Richtung zu dem anderen Führungsschienenabschnitt (2b, 2a) vorbewegbar ist, um von der zweiten Schaltstellung in die erste Schaltstellung zu gelangen.

2. Hängefördereinrichtung nach Anspruch 1, **dadurch gekennzeichnet, dass** das Weichenzungenelement (14) aus der ersten Schaltstellung in die zweite Schaltstellung im Wesentlichen geradlinig zurückbewegbar ist.

3. Hängefördereinrichtung nach Anspruch 1 oder 2, **dadurch gekennzeichnet, dass** das Weichenzungenelement (14) von dem in Bezug auf die Förderrichtung stromaufwärtigen Führungsschienenabschnitt (2a) der beiden Führungsschienenabschnitte (2a, 2a) ausgehend in die erste Schaltstellung vorschiebbar ist.

4. Hängefördereinrichtung nach Anspruch 1, 2 oder 3, **dadurch gekennzeichnet, dass** das Weichenzungenelement teleskopisch ohne Unterbrechung der ersten Förderstrecke zwischen dem Weichenzungenelement und dem einen Führungsschienenabschnitt von diesem ausgehend in die erste Schaltstellung vorbewegbar ist.

5. Hängefördereinrichtung nach einem der Ansprüche 1, 2 oder 3, **dadurch gekennzeichnet, dass** beim Übergang des Weichenzungenelementes (14) in die erste Schaltstellung ein Zwischenraum (32) zwischen dem Weichenzungenelement (14) und dem einen Führungsschienenabschnitt (2a) entsteht und dass wenigstens ein Führungsschienenbrückenelement (38) zur Überbrückung des Zwischenraumes (32) entweder
an dem Weichenzungenelement (14) angeordnet ist, und zwar in der Weise, dass es beim Übergang des Weichenzungenelementes in die zweite Schaltstellung mit dem einen Führungsschienenabschnitt (2a) seitlich überlappen kann,
oder
an dem einen Führungsschienenabschnitt angeordnet ist, und zwar in der Weise, dass es beim Übergang des Weichenzungenelementes in die zweite Schaltstellung mit dem Weichenzungenelement seitlich überlappen kann.

6. Hängefördereinrichtung nach Anspruch 5, **dadurch gekennzeichnet, dass** das Führungsschienenbrückenelement (38) ein seitlich an dem Weichenzungenelement (14) bzw. an dem Führungsschienenabschnitt befestigtes Plattenteil ist, dessen oberer Rand zumindest näherungsweise mit dem oberen Rand des Weichenzungenelementes (14) und dem oberen Rand des einen Führungsschienenabschnittes (2a) in einer gemeinsamen Ebene liegt.

7. Hängefördereinrichtung nach Anspruch 6, **dadurch gekennzeichnet, dass** an beiden Seiten des Weichenzungenelementes (14) bzw. des Führungsschienenabschnittes ein solches Plattenteil (38) vorgesehen ist.

8. Hängefördereinrichtung nach einem der vorhergehenden Ansprüche, **gekennzeichnet durch** eine mittels einer Weichensteuereinrichtung (26, 28) steuerbare Schaltantriebsvorrichtung (22, 24) für das Weichenzungenelement (14).

9. Hängefördereinrichtung nach Anspruch 8, **dadurch gekennzeichnet, dass** die Schaltantriebsvorrichtung einen pneumatischen oder einen hydraulischen Zylinder (22, 24) als Schaltantriebselement aufweist.

10. Hängefördereinrichtung nach Anspruch 8, **dadurch gekennzeichnet, dass** die Schaltantriebsvorrichtung einen Elektromotor oder einen Elektromagneten als Schaltantriebselement aufweist.

11. Hängefördereinrichtung nach Anspruch 9 oder 10, **dadurch gekennzeichnet, dass** das Schaltantriebselement (22, 24) an dem einen Führungsschienenabschnitt (2a) angeordnet, insbesondere in diesen integriert ist und dass das Weichenzungenelement (14) an einem längs dem Führungsschienenabschnitt (2a) vor- und zurückbewegbaren Weichenzungenträger (22) des Schaltantriebselementes (22, 24) befestigt ist.

12. Hängefördereinrichtung nach einem der vorhergehenden Ansprüche, **dadurch gekennzeichnet, dass** das Weichenzungenelement (14) an seinem vorderen Ende eine Schrägflanke (16) aufweist, die in der zweiten Schaltstellung eine Rampe für das Abführen von Fördergutträgerhaken (6) nach unten zur zweiten Förderstrecke bildet.

13. Hängefördereinrichtung nach einem der vorhergehenden Ansprüche, **dadurch gekennzeichnet, dass** zumindest in Zuordnung zur ersten Förderstrecke eine Schleppeinrichtung (8, 10) mit Mitnehmerelementen zur Mitnahme von die Führungsschiene (2) mit ihren Haken (6) übergreifenden Fördergutträgern (4) längs der ersten Förderstrecke vorgesehen ist.

14. Hängefördereinrichtung nach Anspruch 13, **dadurch gekennzeichnet, dass** die Mitnehmerelemente (10) an einem Schleppband oder einer Schleppkette (8) angeordnete Klinken, Stifte oder Bürstenelemente sind.

15. Hängefördereinrichtung nach einem der vorhergehenden Ansprüche, **dadurch gekennzeichnet, dass** sie einen die Weiche (15) enthaltenden Sortierfördererbereich umfasst.

16. Hängefördereinrichtung nach Anspruch 15, **dadurch gekennzeichnet, dass** der Sortierfördererbereich mehrere Weichen umfasst.

17. Hängefördereinrichtung nach Anspruch 8 oder nach einem darauf rückbezogenen Anspruch, **dadurch gekennzeichnet, dass** die Weichensteuereinrichtung (26, 28) ein Datenerfassungsgerät (26), insbesondere optisches Lesegerät oder Transpondergerät, zur Erfassung von betreffenden Kennzeichnungen an den der Weiche (15) jeweils zugeführten Fördergutträgern (4) oder an daran befindlichem Fördergut umfasst.

18. Hängefördereinrichtung nach einem der vorhergehenden Ansprüche, **dadurch gekennzeichnet, dass** das Weichenzungenelement (14) auf einer insbesondere an einer Führungsschiene (2c) der zweiten Förderstrecke ausgebildeten Stützfläche (30) aufliegend zwischen seinen Schaltstellungen hin- und herbewegbar ist.
